# EUROPÄISCHE PATENTSCHRIFT

(11) **EP 3 225 575 B1**
(45) Veröffentlichungstag und Bekanntmachung des Hinweises auf die Patenterteilung: **29.01.2020**
(21) Anmeldenummer: 17155533.7
(22) Anmeldetag: 10.02.2017
(51) Int. Cl.: B65H 54/26, B65H 54/72, H02G 11/00, H02G 3/04, D01H 13/00

(54) **SCHLEPPKETTENFÜHRUNG EINER KREUZSPULEN HERSTELLENDEN TEXTILMASCHINE**
TRAILING CHAIN GUIDE OF A TEXTILE MACHINE FOR CREATING CROSS-WOUND SPOOLS
GUIDAGE DE CHAÎNE DE TRAÎNAGE D'UNE MACHINE TEXTILE FABRIQUANT DES BOBINES CROISÉES

(30) Priorität: 31.03.2016 DE 202016002052 U
(43) Veröffentlichungstag der Anmeldung: 04.10.2017
(73) Patentinhaber: Saurer Spinning Solutions GmbH & Co. KG, 52531 Übach-Palenberg (DE)
(72) Erfinder: Kaspers, Stephan, 41748 Viersen (DE); Schiffers, Philipp, 41812 Erkelenz (DE); Toepke, Heiko, 52499 Baesweiler (DE); Wassen, Harald, 41366 Schwalmtal (DE)

(56) Entgegenhaltungen:
- DE-A1-102005 015 182
- DE-A1-102012 103 531
- DE-U1-202006 006 665
- DE-U1-202011 101 573

## Beschreibung

Die Erfindung betrifft eine Kreuzspulen herstellende Textilmaschine mit einer Vielzahl in Längsrichtung der Textilmaschine nebeneinander angeordneten Arbeitsstellen, mit wenigstens einem in Längsrichtung der Textilmaschine entlang der Arbeitsstellen verfahrbaren Serviceaggregat und mit einer Schleppketteneinrichtung zur elektrischen und/oder pneumatischen Energieversorgung des Serviceaggregates, wobei die Schleppketteneinrichtung eine Schleppkette sowie eine Schleppkettenführung aus einem Metallprofil umfasst, die sich in Längsrichtung der Textilmaschine erstreckt. Des Weiteren betrifft die Erfindung eine Schleppkettenführung einer Kreuzspulen herstellenden Textilmaschine, welche sich in Einbaulage in der Textilmaschine in Längsrichtung der Textilmaschine erstreckt.

Serviceaggregate, die die Arbeitsstellen von Kreuzspulen herstellenden Textilmaschinen selbsttätig versorgen, sind seit langem bekannt und in verschiedenen Schutzrechtsanmeldungen ausführlich beschrieben.

Es sind dabei sowohl unterschiedliche Ausführungsformen solcher Serviceaggregate bekannt, als auch diverse Verfahren, wie derartige Serviceaggregate vorteilhaft eingesetzt werden können, um die Arbeitsstellen der Textilmaschinen optimal zu versorgen.

Von Offenend-Rotorspinnmaschinen sind beispielsweise so genannte Anspinnwagen bekannt, die entlang den Arbeitsstellen dieser Textilmaschinen verfahrbar angeordnet sind und bei Bedarf selbsttätig eingreifen. Derartige Anspinnwagen reinigen beispielsweise die Spinneinrichtungen der Arbeitsstellen, beheben Fadenbrüche und wechseln fertig gestellte Kreuzspulen gegen Leerhülsen aus.

Ähnliche Serviceaggregate sind auch im Zusammenhang mit Kreuzspulautomaten, das heißt, mit Spulmaschinen, die Ringspinnkopse zu Kreuzspulen umwickeln, nicht neu. Diese als Kreuzspulenwechsler bekannten Serviceaggregate sorgen insbesondere dafür, dass eine Kreuzspule, die einen vorgegebenen Durchmesser erreicht hat, aus der Spulstelle ausgestoßen und anschließend eine neue Leerhülse in den Spulenrahmen eingelegt wird.

Die bekannten Serviceaggregate werden in der Regel über eine sogenannte Schleppketteneinrichtung mit Energie versorgt. Eine solche Schleppketteneinrichtung umfasst üblicherweise neben einer Schleppkette auch ein Metallprofil, das als Schleppkettenführung dient. Außer einem Kabel für elektrische Energie wird in der Regel auch wenigstens ein Schlauch für die Zuführung von Druckluft sowie Datenleitungen mitgeführt.

Während das eine Ende der Schleppkette etwa in der Mitte der Textilmaschine befestigt ist, ist das andere Ende über eine Deichsel mit dem Serviceaggregat verbunden.

Das heißt, das Serviceaggregat bewegt über die Deichsel die Schleppkette und rollt diese auf oder ab.

Durch die DE 10 2012 103 531 A1 ist eine Textilmaschine mit einer Schleppkettenführung gemäß dem Oberbegriff des Anspruchs 1 offenbart. Beim Verfahren der Wartungseinrichtung entlang der Textilmaschine wird die Schleppkette unter Bildung einer Reserveschlaufe aus ihrer Führung heraus aufgerollt bzw. beim Verfahren in entgegengesetzter Richtung in die Schleppkettenführung abgelegt. Um mehrere Wartungseinrichtungen effizient an einer Textilmaschine einsetzen zu können, ist neben einer ersten Schleppkettenführung mit zwei Führungsbahnen eine zweite Schleppkettenführung mit wenigstens drei Führungsbahnen vorgesehen, wobei die erste und/oder die zweite Schleppkettenführung wahlweise an der Textilmaschine befestigbar sind.

Nachteilig an derartigen Vorrichtungen ist, dass das verfahrende Serviceaggregat mit zunehmendem Verfahrweg eine immer größere Zugkraft aufbringen muss, um die Schleppkette mit sich führen zu können. Dadurch ist die Länge einer solchen Schleppkette und somit der Arbeitsbereich einer Wartungseinrichtung begrenzt.

In der EP 0 861 387 B1 ist beschrieben, wie die Reibung und der Verschleiß in den Gelenken einer Gliederkette verringert werden kann. Dazu wird an einem Kettenglied ein zusätzlicher Körper angebracht, der mindestens einen Teil der Gleitfläche bildet. Als Material für den zusätzlichen Körper können metallische Werkstoffe, zum Beispiel gehärteter Stahl, Kunststoff bzw. schmierstoff- bzw. gleitstoffgefüllte Kunststoffe oder Keramik verwendet werden. Durch das Anfügen eines oder mehrerer Körper an ein Kettenglied soll die Möglichkeit bestehen, den Reibverschleiß beim Betrieb gezielt zu verringern und auf bestimmte Teile zu begrenzen.

Das Verfahren und die Kettenglieder gemäß der EP 0 861 387 B1 sind allerdings nicht dazu geeignet, die notwendige, mit zunehmendem Verfahrweg des Serviceaggregates entlang einer Textilmaschine immer größer werdende Zugkraft zur Mitnahme der Schleppkette zu verringern.

Die DE 20 2006 006 665 U1 offenbart eine Schleppkettenführung gemäß dem Oberbegriff des Anspruchs 4.

Ausgehend vom eingangs genannten Stand der Technik liegt der Erfindung die Aufgabe zugrunde, eine Textilmaschine mit einer Schleppketteneinrichtung bzw. eine Schleppkettenführung einer Textilmaschine zu entwickeln, die so ausgebildet sind, dass die Zugkraft zur Mitnahme der Schleppkette für das entlang einer Textilmaschine verfahrbare Serviceaggregat verringert wird.

Diese Aufgabe wird durch die kennzeichnenden Merkmale einer Textilmaschine mit einer Schleppketteneinrichtung, wie sie im Anspruch 1 bzw. mit einer Schleppkettenführung einer Textilmaschine, wie sie in Anspruch 4 beschrieben ist, gelöst. Vorteilhafte Ausgestaltungen der Erfindung sind Gegenstand der Unteransprüche.

Zur Lösung der Aufgabe bestehen gemäß Anspruch 1 die mit der Schleppkette in Kontakt kommenden Oberflächen der Schleppkettenführung mindestens bereichsweise aus einem Material, das einen Gleitpartner für die Schleppkette mit geringem Reibungskoeffizienten bildet.

Dadurch, dass mindestens Bereiche der Schleppkettenführung einen geringeren Reibungskoeffizienten aufweisen als die übrigen Bereiche des Metallprofils, ist eine geringere Zugkraft des Serviceaggregates nötig, um die Schleppkette zu ziehen bzw. mit sich zu führen. Somit kann eine längere Schleppkette eingesetzt werden, was dazu führt, dass der Verfahrweg des Serviceaggregates länger sein kann. Dies führt wiederum dazu, dass der einzelne Arbeitsbereich des Serviceaggregates größer gestaltet werden kann. Letztendlich kann auf diese Weise der Einsatz und die Effizienz der Serviceaggregate vor allem an sehr langen Textilmaschinen verbessert werden.

Ein weiterer Vorteil der Lösung ist, dass durch die erfindungsgemäße Schleppkettenführung konstruktiv simple und damit günstige Schleppketten verwendet werden können. Aufwendige und kostenintensivere Schleppketten, beispielsweise mit Rollen, wie sie aus dem Stand der Technik bekannt sind, sind nicht mehr notwendig, um einen weiten Verfahrweg des Serviceaggregates gewährleisten zu können.

Im Rahmen der Erfindung ist es dabei selbstverständlich möglich, die Bereiche der Schleppkettenführung, die einen geringeren Reibungskoeffizienten aufweisen als die übrigen Bereiche, sowohl hinsichtlich ihrer Größe als auch bezüglich ihres Abstandes zueinander variabel und bedarfsgerecht zu gestalten.

Erfindungsgemäß werden die Oberflächen mit geringem Reibungskoeffizienten durch beabstandet angeordnete Gleitstücke gebildet.

Durch eine derartige Ausgestaltung der Schleppkettenführung kann sogar eine sich bereits im Einsatz befindende Kreuzspulen herstellende Textilmaschine nachträglich auf relativ einfache und kostengünstige Weise so modifiziert werden, dass die Zugkraft, die notwendig ist, damit das jeweilige Serviceaggregat die Schleppkette mit sich führen kann, deutlich verringert wird.

Diese Gleitstücke können einteilig oder mehrteilig ausgebildet sein. Einteilige Gleitstücke lassen sich besonders einfach in die Schleppkettenführung einbringen; bei einer mehrteiligen Ausbildung können zum Beispiel zwei Leisten in der Schleppkettenführung angeordnet sein, die als Gleitpartner für die Schleppkette zusammenwirken.

Die Schleppkettenführung weist erfindungsgemäß Bodenöffnungen auf, in denen die Gleitstücke so angeordnet sind, dass die Oberfläche der Gleitstücke, die mit der Schleppkette in Kontakt kommt, die Schleppkettenführung überragt. Da die Gleitstücke die übrige Schleppkettenführung überragen, gleitet die Schleppkette mehr auf den Gleitstücken als auf den übrigen Bereichen der Schleppkettenführung.

Gemäß Anspruch 2 bestehen vorteilhafterweise die Gleitstücke aus Kunststoffeinsätzen.

Eine derartige Ausgestaltung ist fertigungstechnisch und hinsichtlich der Kosten besonders vorteilhaft umzusetzen. Aber auch andere Materialalternativen, wie beispielsweise Gleitstücke aus Keramik oder anderem glatten Material sollen durch die Erfindung abgedeckt sein.

In einer vorteilhaften Ausführungsform, wie in Anspruch 3 dargelegt, sind die Gleitstücke mittels Klippverbindung in Bodenöffnungen der Schleppkettenführung fixiert und überragen mit ihrer auf die Schleppkette gerichteten Oberfläche die Schleppkettenführung.

Eine derartige Ausführungsform hat sich als besonders vorteilhaft erwiesen, denn dadurch, dass die Gleitstücke bzw. Kunststoffeinsätze klippbar ausgebildet sind, können ohnehin vorhandene Ausnehmungen in der Schleppkettenführung dazu genutzt werden, die Gleitstücke zu fixieren. Alternativ könnten die Gleitstücke auch durch Kleben oder Schrauben oder eine andere geeignete Verbindungstechnik in bzw. auf der Schleppkettenführung angebracht werden.

Anspruch 4 beansprucht eine Schleppketteneinrichtung, bei der erfindungsgemäß die mit der Schleppkette in Kontakt kommenden Oberflächen der Schleppkettenführung mindestens bereichsweise aus einem Material, das einen Gleitpartner für die Schleppklette mit geringem Reibungskoeffizienten bildet, bestehen.

Mit derartigen Schleppkettenführungen können längere Schleppketten eingesetzt werden, da die Zugkraft zur Mitnahme der Schleppkette reduziert wird. Somit kann die Versorgung längerer Textilmaschinen auf eine wirtschaftliche und kostengünstige Weise gewährleistet werden, ohne dass die Effizienz beeinträchtigt wird.

Außerdem können mit der erfindungsgemäßen Lösung auch Textilmaschinen um- bzw.-ausgerüstet werden, die bereits in Betrieb genommen sind, ohne dass aufwendige und langwierige Umbaumaßnahmen notwendig sind. Sogar die bisherigen zum Einsatz gekommenen günstigen Schleppketten können weiter verwendet werden.

Die Erfindung wird nachfolgend anhand der in den Zeichnungen dargestellten Ausführungsbeispiele näher erläutert.

Es zeigt:
- Figur 1: in Seitenansicht eine Arbeitsstelle einer Kreuzspulen herstellenden Textilmaschine mit einem Serviceaggregat, das an Fahrschienen der Textilmaschine angeordnet ist,
- Figur 2: schematisch eine Draufsicht auf eine Kreuzspulen herstellende Textilmaschine, mit Serviceaggregaten,
- Figur 3: schematisch eine in einer erfindungsgemäß ausgebildeten Schleppkettenführung geführte Schleppkette.

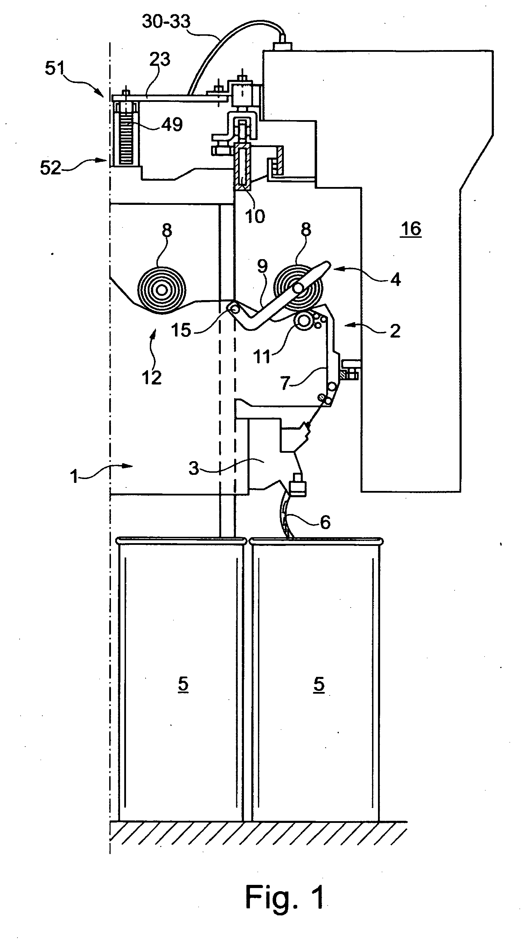

In Figur 1 ist in Seitenansicht eine Hälfte einer Kreuzspulen herstellenden Textilmaschine 1, im vorliegenden Fall einer Offenend-Rotorspinnmaschine, dargestellt.

Derartige Textilmaschinen 1 weisen, wie bekannt, eine Vielzahl gleichartiger Arbeitsstellen 2 auf, die unter anderem jeweils über eine OE-Spinnvorrichtung 3 sowie über eine Spuleinrichtung 4 verfügen.

Auf diesen Arbeitsstellen 2 wird Faserband 6, das in Spinnkannen 5 bevorratet ist, zu Fäden 7 versponnen, die anschließend auf den Spuleinrichtungen 4 zu Kreuzspulen 8 aufgewickelt werden.

Wie in Figur 1 angedeutet, sind die Spuleinrichtungen 4 mit einem Spulenrahmen 9 zum drehbaren Haltern einer Kreuzspulenhülse sowie mit einer Wickelwalze 11 zum reibschlüssigen Antreiben der Kreuzspulen 8 ausgestattet. Der Spulenrahmen 9 ist dabei wenigstens um eine Schwenkachse 15 begrenzt drehbar gelagert.

Derartige Offenend-Rotorspinnmaschinen weisen in der Regel außerdem eine Kreuzspulentransporteinrichtung 12 zum Entsorgen von fertig gestellten Kreuzspulen 8 auf, das heißt, von Kreuzspulen 8, die ihren vorgesehenen Durchmesser erreicht haben.

An beziehungsweise auf der Offenend-Rotorspinnmaschine sind, an entsprechenden Fahrschienen 10 bzw. 20 verfahrbar, selbsttätig arbeitende Serviceaggregate 16 angeordnet, die während des Spinnbetriebes entlang der Arbeitsstellen 2 der Offenend-Rotorspinnmaschine patrouillieren und selbsttätig eingreifen, wenn an einer der Arbeitsstellen 2 ein Handlungsbedarf entsteht.

Ein solcher Handlungsbedarf liegt beispielsweise vor, wenn an einer der Arbeitsstellen 2 eine der Kreuzspulen 8 ihren vorgeschriebenen Durchmesser erreicht hat und gegen eine neue Kreuzspulenhülse ausgetauscht werden muss.

Derartige, beispielsweise in der DE 35 43 572 C2 beschriebene Serviceaggregate weisen eine Vielzahl von Handhabungselementen auf, die an sich bekannt und in der vorstehend erwähnten Schutzrechtsanmeldung ausführlich beschrieben sind.

In den Figuren der vorliegenden Schutzrechtsanmeldung wurde der Übersichtlichkeit halber auf die Darstellung dieser bekannten Handhabungselemente verzichtet.

Die Serviceaggregate 16 werden über eine sogenannte Schleppketteneinrichtung 51 sowohl mit elektrischer als auch mit pneumatischer Energie versorgt. Über die Schleppketteneinrichtung 51 bzw. entsprechende Datenleitungen 32, 33 sind die Serviceaggregate 16 außerdem an eine Zentralsteuereinheit 17 der Offenend-Rotorspinnmaschine 1 angeschlossen.

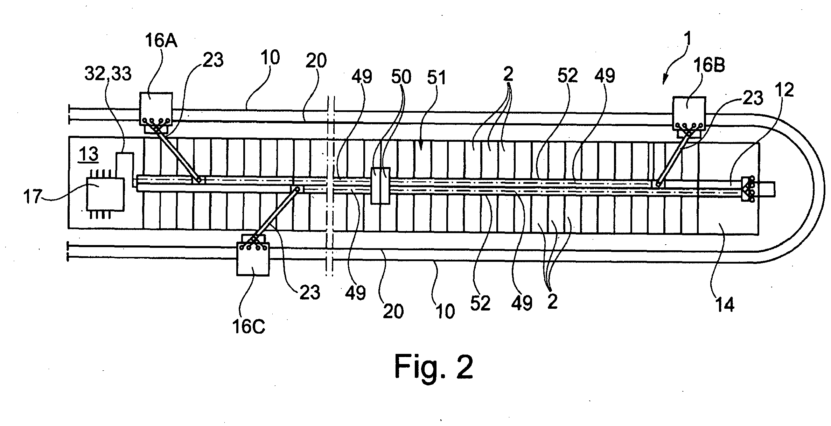

Die Schleppketteneinrichtung 51 weist, wie in der Figur 1 bzw. der Figur 2 angedeutet, eine Schleppkettenführung 52 auf.

In jeder dieser Schleppkettenführungen 52 sind, wenn die Textilmaschine 1 für einen Einsatz von zwei Serviceaggregaten 16 pro Maschinenseite konzipiert ist, hintereinander zwei separate Schleppketten 49 geführt.

Die Schleppketten 49 sind mit einem Ende jeweils an einer etwa in der Mitte der Offenend-Rotorspinnmaschine angeordneten Anschlussstelle 50 festgelegt und mit ihrem gegenüberliegenden Ende jeweils an ein Serviceaggregat 16 angeschlossen.

In Figur 2 ist eine Kreuzspulen herstellende Textilmaschine 1 schematisch in Draufsicht dargestellt.

Solche Textilmaschinen 1 weisen, wie bekannt, zwischen ihren Endgestellen 13 und 14 eine Vielzahl in Reihe nebeneinander angeordneter Arbeitsstellen 2 auf.

Diese beidseitig der Maschinenlängsseiten der Offenend-Spinnmaschine angeordneten Arbeitsstellen 2 werden im Ausführungsbeispiel durch Serviceaggregate 16A, 16B, 16C versorgt, die, wie vorstehend erläutert, an Fahrschienen 10, 20 geführt und deren Steuereinrichtungen, zum Beispiel über einen Maschinenbus 18, sowohl untereinander als auch mit der Zentralsteuereinheit 17 der Textilmaschine 1 verbunden sind.

Die Serviceaggregate 16 werden dabei über eine in der Regel oberhalb der Textilmaschine 1 im Bereich der Längsmittelachse der Textilmaschine 1 angeordnete Schleppketteneinrichtung 51 versorgt.

Das heißt, in der Schleppkettenführung 52 ist die Schleppkette 49 gelagert, an die jeweils ein Serviceaggregat angeschlossen ist.

Die Schleppketten 49 sind mit ihren gegenüberliegenden Enden außerdem an Anschlussstellen 50 festgelegt, die etwa in der Mitte der Textilmaschine 1 angeordnet sind.

In die Schleppketten 49 sind Energieversorgungsleitungen 30 und 31 sowie Datenleitungen 32, 33 eingebettet, die über die Deichsel 23 mit dem Serviceaggregat 16 verbunden sind.

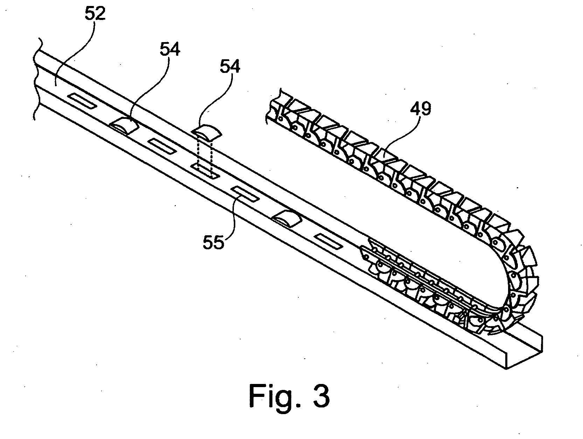

In Figur 3 ist eine Schleppkette 49 in einer Schleppkettenführung 52 dargestellt. Die Schleppkettenführung 52, die üblicherweise aus einem Metallprofil besteht, weist Bodenöffnungen 55 auf. In diese Ausnehmungen werden Gleitstücke 54 angeordnet, so dass die Oberfläche der Gleitstücke 54, die mit der Schleppkette 49 in Kontakt kommen, die Schleppkettenführung 52 überragen. In diesem Ausführungsbeispiel ist in jeder zweiten Bodenöffnung 55 ein Gleitstück 54 eingesetzt, so dass mit dem Verfahren des Serviceaggregates 16 die Schleppkette 49 beim Auf- und Abrollen überwiegend über die Gleitstücke 54 gleitet.

## Patentansprüche

1. Kreuzspulen herstellende Textilmaschine, mit einer Vielzahl in Längsrichtung der Textilmaschine (1) nebeneinander angeordneten Arbeitsstellen (2), mit wenigstens einem in Längsrichtung der Textilmaschine (1) entlang der Arbeitsstellen (2) verfahrbaren Serviceaggregat (16) und mit einer Schleppketteneinrichtung (51) zur elektrischen und/oder pneumatischen Energieversorgung des Serviceaggregates (16), wobei die Schleppketteneinrichtung (51) eine Schleppkette (49) sowie eine Schleppkettenführung (52) aus einem Metallprofil umfasst, die sich in Längsrichtung der Textilmaschine (1) erstreckt,
**dadurch gekennzeichnet,**
**dass** mit der Schleppkette (49) in Kontakt kommende Oberflächen der Schleppkettenführung (52) mindestens bereichsweise aus einem Material bestehen, das einen Gleitpartner für die Schleppklette (49) mit geringem Reibungskoeffizienten bildet, dass die Oberflächen mit geringem Reibungskoeffizienten durch beabstandet angeordnete Gleitstücke (54) gebildet werden, dass die Schleppkettenführung Bodenöffnungen (55) aufweist, in denen die Gleitstücke (54) so angeordnet sind, dass die Oberfläche der Gleitstücke (54), die mit der Schleppkette (49) in Kontakt kommt, die Schleppkettenführung (52) überragt.

2. Textilmaschine nach Anspruch 1, **dadurch gekennzeichnet, dass** die Gleitstücke (54) aus Kunststoffeinsätzen bestehen.

3. Textilmaschine nach Anspruch 1, **dadurch gekennzeichnet, dass** die Gleitstücke (54) mittels Klippverbindung in den Bodenöffnungen (55) der Schleppkettenführung (52) fixiert sind und mit ihrer auf die Schleppkette (49) gerichteten Oberfläche die Schleppkettenführung (52) überragen.

4. Schleppkettenführung (52) für eine Kreuzspulen herstellende Textilmaschine (1), welche sich in Einbaulage in der Textilmaschine (1) in Längsrichtung der Textilmaschine (1) erstreckt, wobei die mit einer Schleppkette (49) in Kontakt kommenden Oberflächen der Schleppkettenführung (52) mindestens bereichsweise aus einem Material bestehen, das einen Gleitpartner für die Schleppklette (49) mit geringem Reibungskoeffizienten bildet, und die Oberflächen mit geringem Reibungskoeffizienten durch beabstandet angeordnete Gleitstücke (54) gebildet werden, **dadurch gekennzeichnet, dass** die Schleppkettenführung Bodenöffnungen (55) aufweist, in denen die Gleitstücke (54) so angeordnet sind, dass die Oberfläche der Gleitstücke (54), die mit einer Schleppkette (49) in Kontakt kommt, die Schleppkettenführung (52) überragt.

## Claims

1. Textile machine producing cross-wound packages, comprising a plurality of workstations (2) arranged next to one another in the longitudinal direction of the textile machine (1), at least one service unit (16), which can be moved along the workstations (2) in the longitudinal direction of the textile machine (1), and a drag chain device (51) for supplying electrical and/or pneumatic power to the service unit (16), the drag chain device (51) comprising a drag chain (49) and a drag chain guide (52) made of a metal profiled element, which drag chain guide (52) runs in the longitudinal direction of the textile machine (1),
**characterised in that**
the surfaces of the drag chain guide (52) that come in contact with the drag chain (49) consist, at least in some areas, of a material that forms a sliding partner for the drag chain (49) with low coefficient of friction, that the surfaces with low coefficient of friction are formed by spaced sliding pieces (54), and that the drag chain guide has bottom openings (55), in which the sliding pieces (54) are arranged in such a way that the surface of the sliding pieces (54) that comes in contact with the drag chain (49) projects beyond the drag chain guide (52).

2. Textile machine according to claim 1, **characterised in that** the sliding pieces (54) consist of plastic inserts.

3. Textile machine according to claim 1, **characterised in that** the sliding pieces (54) are fastened in the bottom openings (55) of the drag chain guide (52) by means of a clip connection and that the surface of the sliding pieces (54) that is directed toward the drag chain (49) projects beyond the drag chain guide (52).

4. Drag chain guide (52) for a textile machine (1) producing cross-wound packages, which drag chain guide (52) runs in the longitudinal direction when in the installed position in the textile machine (1),
wherein the surfaces of the drag chain guide (52) that come in contact with a drag chain (49) consist, at least in some areas, of a material that forms a sliding partner for the drag chain (49) with low coefficient of friction, and the surfaces with low coefficient of friction are formed by spaced sliding pieces (54),
**characterised in that**
the drag chain guide has bottom openings (55), in which the sliding pieces (54) are arranged in such a way that the surface of the sliding pieces (54) that comes in contact with a drag chain (49) projects beyond the drag chain guide (52).

## Revendications

1. Machine textile produisant des bobines croisées, avec de nombreux postes de travail (2) disposés l'un à côté de l'autre dans le sens longitudinal de la machine textile (1), avec au moins un groupe de service (16) déplaçable le long des postes de travail (2) dans le sens longitudinal de la machine textile (1) et avec un dispositif de chaîne d'entraînement (51) pour l'alimentation en énergie électrique et/ou pneumatique du groupe de service (16), sachant que le dispositif de chaîne d'entraînement (51) comprend une chaîne d'entraînement (49) et un guidage de chaîne d'entraînement (52) en profilé métallique, qui s'étend dans le sens longitudinal de la machine textile (1),
**caractérisée en ce**
**que** les surfaces du guidage de chaîne d'entraînement (52) entrant en contact avec la chaîne d'entraînement (49) sont composées au moins par endroits d'un matériau formant un élément de glissement pour la chaîne d'entraînement (49) avec un faible coefficient de frottement ; que les surfaces ayant un faible coefficient de frottement sont formées par des éléments coulissants (54) espacés ; que le guidage de chaîne d'entraînement présente des ouvertures dans le fond (55), dans lesquelles les éléments coulissants (54) sont disposés de telle sorte que la surface des éléments coulissants (54) entrant en contact avec la chaîne d'entraînement (49) surplombe le guidage de chaîne d'entraînement (52).

2. Machine textile selon la revendication 1, **caractérisée en ce que** les éléments coulissants (54) sont constitués par des inserts en plastique.

3. Machine textile selon la revendication 1, **caractérisée en ce que** les éléments coulissants (54) sont fixés dans les ouvertures dans le fond (55) du guidage de chaîne d'entraînement (52) à l'aide d'un raccord à clip et surplombent le guidage de chaîne d'entraînement (52) avec leur surface dirigée vers la chaîne d'entraînement (49).

4. Guidage de chaîne d'entraînement (52) pour une machine textile (1) produisant des bobines croisées, qui s'étend en position de montage dans la machine textile (1) dans le sens longitudinal de la machine textile (1),
sachant que les surfaces du guidage de chaîne d'entraînement (52) entrant en contact avec une chaîne d'entraînement (49) sont composées au moins par endroits d'un matériau formant un élément de glissement pour la chaîne d'entraînement (49) avec un faible coefficient de frottement, et que les surfaces ayant un faible coefficient de frottement sont formées par des éléments coulissants (54) espacés,
**caractérisé en ce**
**que** le guidage de chaîne d'entraînement présente des ouvertures dans le fond (55), dans lesquelles les éléments coulissants (54) sont disposés de telle sorte que la surface des éléments coulissants (54) entrant en contact avec une chaîne d'entraînement (49) surplombe le guidage de chaîne d'entraînement (52).
